# EUROPÄISCHE PATENTSCHRIFT

(11) **EP 3 819 347 B1**
(45) Veröffentlichungstag und Bekanntmachung des Hinweises auf die Patenterteilung: **31.12.2025**
(21) Anmeldenummer: 19207433.4
(22) Anmeldetag: 06.11.2019
(51) Int. Cl.: C09J 7/10, C09J 7/30

(54) **VERFAHREN ZUR HERSTELLUNG EINES KLEBEPRODUKTES**
METHOD FOR PRODUCING AN ADHESIVE PRODUCT
PROCÉDÉ DE FABRICATION D'UN PRODUIT ADHÉSIF

(43) Veröffentlichungstag der Anmeldung: 12.05.2021
(73) Patentinhaber: Coroplast Fritz Müller GmbH & Co. KG, 42279 Wuppertal (DE)
(72) Erfinder: FIESELMANN, Torsten, 40723 Hilden (DE); LUENNE, Mario, 40699 Erkrath (DE); DÜRDODT, Nils, 42119 Wuppertal (DE)
(74) Vertreter: Dr. Solf & Zapf Patent- und Rechtsanwalts PartG mbB

(56) Entgegenhaltungen:
- EP-A1- 2 116 582
- EP-A1- 3 415 580
- WO-A1-2008/095653
- WO-A1-2017/157639
- WO-A1-2019/081148
- US-A1- 2010 092 768

## Beschreibung

Die Erfindung betrifft ein Verfahren zur Herstellung eines Klebeproduktes, umfassend mindestens eine Klebeschicht. gemäß Anspruch 1. Optional kann das Klebeprodukt einen textilen oder einen Folienträger aufweisen, auf den die Klebeschicht aufgetragen ist, so dass es sich bei dem Klebeprodukt insbesondere um ein Klebeband handelt.

In der heutigen Produktion von Klebebändern werden verschiedene Schneidverfahren benutzt, um nach der Beschichtung einer Mutterrolle ein Klebeband herzustellen, welches für den Endanwender in einer passenden Größe verarbeitet werden kann.

Zu unterscheiden sind dabei verschiedene Klebebandtypen. Zum einen gibt es einseitige Klebebänder, welche sich durch einen Träger und eine einseitige Klebeschicht auszeichnen. Zum anderen sind auch doppelseitige Klebebänder und so genannte Transferklebebänder möglich. Doppelseitige Klebebänder zeichnen sich dabei durch einen Träger aus, der beidseitig mit einem Klebstoff beschichtet wurde. Ein Transferklebeband ist dabei ein Klebeband, bei welchem kein Trägermaterial benutzt wird, sondern nur der Kleber selbst verwendet wird. Bei doppelseitigen und Transfer-Klebebändern ist ein so genannter Liner zwingend notwendig, welcher die zwei aufeinanderfolgenden Lagen der Rolle voneinander trennt, da diese sonst miteinander verkleben würden. Der Liner besteht aus einem Trägermaterial, welches durch z. B. eine Silikonbeschichtung für den Klebstoff sehr schwer verklebbar ist und somit leicht zu entfernen. Ein solcher Liner kann auch bei einseitigen Klebebändern erforderlich sein, damit diese nicht auf dem Klebebandrücken festkleben.

Die verschiedenen Klebebandtypen können dabei unterschiedliche Dicken, je nach Auftragsgewicht des Klebstoffes und der Dicke des Trägermaterials, aufweisen. Auch bei einer Klebstoffschicht, welche an den Schnittkanten offenliegt, werden die gewünschten Eigenschaften des Klebebandes erreicht. Jedoch kann dies unter Umständen zu einer Beeinträchtigung in der Endanwendung führen, da das Klebeband beispielsweise in Anwendungen bei hohen Temperaturen einem Oxidationsprozess unterliegen kann. Bei einem solchen Oxidationsprozess ist es möglich, dass sich die Klebstoffstruktur abzubauen oder nachzuvernetzen beginnt, so dass danach die haftklebrigen Eigenschaften des Klebstoffs nicht mehr gegeben sind.

Es ist denkbar, dass Eigenschaften, wie die Farbe des Klebers, nicht für die Anwendung in Frage kommen oder diese negativ beeinflussen. So können beispielsweise bei Bauteilverklebungen Fügekanten entstehen, welche eine andere Farbe als das restliche Bauteil besitzen und somit die Optik des Gesamtsystems negativ beeinflussen.

Zudem ist es von Bedeutung, dass bei Verklebungen, welche auf eine definierte Krafteinwirkung ausgelegt sind, wie beispielsweise bei sicherheitsrelevanten Bauteilen, diese Verklebung, insbesondere hinsichtlich eines eventuellen viskoelastischen Fließens, visuell überwacht werden kann.

Nach dem Schneidvorgang ist, besonders bei dicken Beschichtungen und Klebebändern, welche zumindest teilweise aus viskoelastischen Materialien bestehen, mindestens eine Klebstoffkante vorhanden, welche insbesondere bei einer gestapelten Aufeinander-Lagerung von Klebebandrollen dazu führen kann, dass die Klebebänder zusammenkleben. Durch viskosen Fluss kann, insbesondere bei niedrigviskosen und/oder niedrigvernetzten Klebemassen, der Klebstoff durch einen so genannten "kalten Fluss" seitlich austreten, was zu so genannten Spiegelkanten führt. Besonders bei sehr adhäsiven und wenig kohäsiven Klebebändern kann dies nachteiligerweise dazu führen, dass die Kanten so "gut" miteinander verkleben, dass die Rollen nicht mehr voneinander getrennt werden können. Um eine Abhilfe gegen dieses Verkleben zu schaffen, werden häufig so genannte Seitenscheiben benutzt, welche aus einem Trägermaterial (z. B. aus Papier, PET o. ä.) mit einer für den Kleber nicht adhäsiven Beschichtung, z. B. mit einer hydrophoben Silikonisierung, ausgestattet sind. Diese Seitenscheiben werden beidseitig auf das Klebeband nach dem Schneiden aufgebracht, wodurch es nicht zu einer Verklebung der Seiten kommen kann, da diese sich schlichtweg nicht berühren. Allerdings ist dabei durch die Seitenkanten ein erhöhtes Ressourcenaufkommen im Sinne von Trägern und dementsprechenden Beschichtungsmaterialien notwendig.

In der WO 2008 / 095 653 A1 wird ein Verfahren zur Passivierung einer Kante von Haftklebebändern offenbart, wobei die Passivierung durch physikalische oder chemische Vernetzung des Haftklebers auf der Kante oder durch den physikalischen oder chemischen Abbau der für die haftklebende Wirkung verantwortlichen Strukturen des Haftklebers erfolgt.

Ferner offenbart die EP 2 116 582 A1 Kantenbeschichtungen für Klebebänder, die ein lipophiles Mittel, ein Flockungsmittel oder Kombinationen davon enthalten. Diese Kantenbeschichtungen verbessern die Maskierungsfähigkeit der Klebebänder, indem sie verhindern, dass Farben, Lacke, Abbeizmittel und andere Beschichtungszusammensetzungen, einschließlich ätzender Stoffe, in das Bandsubstrat oder die Schnittstelle zwischen dem Band und dem zu beklebenden Gegenstand eindringen.

Der Erfindung liegt die Aufgabe zu Grunde, mittels eines neuen Verfahrens die Gebrauchseigenschaften von bisher bekannten Klebeprodukten der eingangs genannten Art zu verbessern.

Im Besonderen geht es dabei darum, ein Verfahren zur Behandlung von geschnittenen oder gestanzten oder anders verarbeiteten Klebebändern, die unter dem allgemeinen Begriff Klebeprodukte subsumiert werden, bereitzustellen. Bevorzugtes Ziel ist dabei eine Ausrüstung der Oberfläche, insbesondere der Klebeschicht.

Der technische Schwerpunkt liegt dabei auf Klebeschichten aus UV-gehärteten Acrylatmassen, wobei aber vorteilhafterweise auch andere Systeme, die auf UV-Hotmelt-Basis oder Synthesekautschuk-Basis und/oder auf der Applikation von wässrigen Dispersionen beruhen, von der Erfindung mitumfasst werden können. Solche Systeme finden beispielsweise Anwendung in Klebebändern für Dachspannbahnen und Klebebändern, die im Träger eine Aluminiumlage umfassen.

Die Aufgabe wird erfindungsgemäß dadurch gelöst, dass die Oberfläche der Klebeschicht unter einer zumindest bereichsweisen Bildung einer Schicht einer Funktionalisierung gemäß Anspruch 1 unterzogen wird.

Die Funktionalisierung kann dabei insbesondere eine Passivierung umfassen oder sein, die sich in einem Nicht-Klebrig-Machen und/oder einer Minderung der Klebkraft der Klebeschicht, insbesondere an ihren Kanten, ausdrückt.

Hierdurch wird vorteilhafterweise ein Verzicht auf Trennscheiben und/oder Zwischenlagen bei der Verpackung eines erfindungsgemäßen Klebeartikels möglich. So bewirkt insbesondere eine dauerhaft bereichsweise nicht-klebrige Ausstattung der Klebeschicht an nicht der Hauptfunktion des Verklebens dienenden Stellen die Möglichkeit des Verzichts auf aufwändige Verpackungen, was vorteilhafterweise zu einer Reduktion des Materialeinsatzes und damit der Kosten, und letztlich zur Minimierung des Abfalls, wie insbesondere von Plastikmüll führt.

Die Funktionalisierung kann in einem oder mehreren der folgenden Arbeitsschritte bestehen:
- Schützen vor Verschmutzung bei Handling, Lagerung und Transport bis zur Verwendung,
- Ausrüstung von nicht-klebrigen Kanten der Klebeschicht zur Nutzung als Führungshilfe bei der Förderung des Klebeprodukts bei der Verarbeitung,
- Stabilisierung der Eigenschaften der Klebeschicht, z. B. im Hinblick auf den Einfluss von Wasser, Feucht-Wärme, Hitze und/oder ggf. UV-Bestrahlung, für den Einsatz in einem Innenraum,
- Stabilisierung der Eigenschaften der Klebeschicht, z. B. im Hinblick auf den Einfluss von Wasser, Feucht-Wärme, Hitze, Klimaschwankungen und UV-Licht, für den Einsatz im Außenbereich,
- Schützen des Klebeproduktes vor Extrembedingungen, d. h. Ausrüstung für eine Anwendung unter Bedingungen, unter denen ein nicht ausgerüstetes Klebeprodukt stark in seiner Leistungsfähigkeit eingeschränkt wäre, oder unter denen die Klebverbindung mit einem Objekt, z. B. durch quellende oder zersetzende Medien, extreme Temperaturen, Oxidation, Gase usw., zerstört werden würde,
- Kanteneinfärbung des Klebeproduktes, insbesondere der Klebeschicht, nach Anforderungen der Endkunden, z. B. schwarz für die Automobilbranche,
- Inhibierung von biologischer Aktivität, insbesondere durch antimykotische und/ oder antibakterielle Additive, z. B. zum Schutz gegen Pilzbefall oder Ansiedlung von Mikroben,
- zumindest bereichsweise Versiegelung der Oberfläche, z. B. zur Erzielung niedrigerer Temperaturleitfähigkeiten oder zur Absenkung von oxidativem Angriff oder zur Minderung der Permeation von insbesondere aggressiven Gasen oder anderen Medien, wie zur Verringerung der Dampfdurchlässigkeit insbesondere im Baubereich,
- partielle Veränderung der viskoelastischen Eigenschaften der Klebeschicht im Sinne einer Ausrüstung zur Verhinderung/Verlangsamung des "kalten Flusses", insbesondere zum Verhindern des Ausblutens von verarbeiteten Klebeprodukten, vorzugsweise in sehr schwach vernetzten und/ oder sehr fließfähigen Systemen, oder verursacht durch großen Stress bei der Verarbeitung, z. B. durch Quetschung und/oder Stauchung,
- Nivellierung der Oberfläche der Schnittkanten zur Erzielung eines einheitlichen Rollenspiegels,
- Einstellung von geeigneten Brechungsindizes zur späteren Erzeugung einer "unsichtbaren" Klebefuge, insbesondere bei einer Verklebung von Glas oder transparenten Kunststoffen, wie Polycarbonat oder PMMA,
- Generierung von Tracing-Markern, so dass bei einem erfindungsgemäßen Klebeprodukt ein Nachverfolgen der Verklebung möglich wird, insofern festgestellt werden kann, ob insbesondere ein Klebeband oder Stanzteil richtig in einer Form sitzt, bzw. ob überall Klebstoff vorhanden und/oder der Klebstoff durch Druck-, Zug- und/oder Scherspannungen verformt ist
- Schützen gegen UV-Strahlung.

Im Hinblick auf die zur Funktionalisierung, insbesondere zu einer Passivierung, einzusetzende Verfahrenstechnik sind zur Auftragung von zu einer physikalischen und/oder chemischen Vernetzung oder Beschichtung führenden Medien folgende Verfahren einsetzbar:
- Lackierung, z. B. manuell per Pinsel, Rolle, Bürste oder Schwamm,
- Sprühverfahren, z. B. mit Sprühflasche, Druckdüse, Airbrush, Ultraschall-Zerstäuber etc., vorzugsweise in einem automatisierten Prozess,
- Curtain-Coating-Auftragung, d. h. eine Vorhangbeschichtung, was insbesondere im Hinblick auf die Möglichkeit eines Auffangens des aufzutragenden Mediums von Vorteil ist,
- Auftrag zwischen zwei Walzen unter Druck,
- alle üblichen Beschichtungsverfahren wie Blade-Coating, Auftragung mit Komma-Bar, Rakel sowie indirekte Beschichtung über mehrere Walzen etc..

Nach einer bereichsweisen Auftragung von zu einer physikalischen und/oder chemischen Vernetzung oder Beschichtung führenden Medien auf die Klebeschicht schließt sich eine Trocknung und/oder Aushärtung und/oder Vernetzung in einem Ofen oder in einer Heißluftzone und/oder in einer Reaktionszone an, in der eine Beaufschlagung mit UV- oder Elektronenstrahlung erfolgt.

Weitere vorteilhafte Ausgestaltungen der Erfindung ergeben sich anhand mehrerer Beispiele aus der folgenden Figurenbeschreibung und den abhängigen Ansprüchen.

Es zeigen:
- Fig. 1: in perspektivischer Darstellung, ein stirnseitig geschnittenes erfindungsgemäß hergestelltes Klebeprodukt,
- Fig. 2: einen Querschnitt durch ein weiteres erfindungsgemäß hergestelltes Klebeprodukt,
- Fig. 3a bis 3c: drei jeweils durch chemische Gleichungen beschriebene Reaktionsschritte zur hydrolytischen Zersetzung eines alkylierten silanhaltigen Polymers in einzelnen Reaktionsschritten eines nicht erfindungsgemäßen Verfahrens,
- Fig. 4: zwei Gleichungen zur Beschreibung einer sich an die Reaktionsschritte zur hydrolytischen Zersetzung des alkylierten silanhaltigen Polymers (Fig. 3a bis 3c) anschließende Kondensation (nicht erfindungsgemäß),
- Fig. 5: eine schematisierte chemische Grundgleichung zum Ablauf eines bei Einsatz von silanmodifizierten Polymeren optional ablaufenden Reaktionsschrittes des erfindungsgemäßen Verfahrens,
- Fig. 6a und 6b: chemische Gleichungen zur Veranschaulichung von Reaktionsschritten, die bei der Vernetzung und Filmbildung eines zur Durchführung des erfindungsgemäßen Verfahrens eingesetzten, epoxidierten Polybutadiens ablaufen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

In den verschiedenen Figuren der Zeichnung sind gleiche Teile stets mit denselben Bezugszeichen versehen.

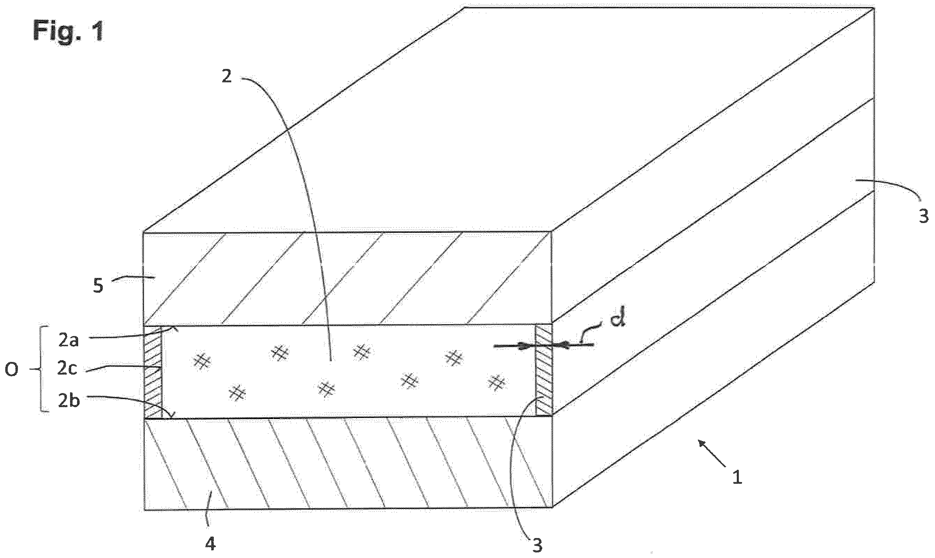

Das in Fig. 1 dargestellte, nach dem erfindungsgemäßen Verfahren hergestellte Klebeprodukt 1 umfasst mindestens eine Klebeschicht 2 mit zwei Deckflächen 2a, 2b, die über Kantenflächen 2c verbunden sind, wobei die Deckflächen 2a, 2b und die Kantenflächen 2c die Oberfläche O der Klebeschicht 2 bilden.

Erfindungsgemäß ist vorgesehen, dass die Oberfläche O der Klebeschicht 2 unter einer zumindest bereichsweisen Bildung einer Schicht 3 einer Funktionalisierung unterzogen wird. Die bereichsweise Funktionalisierung, bei der es sich beispielsweise bevorzugt um eine Passivierung handeln kann, erfolgt exemplarisch auf mindestens einer Kantenfläche 2c, im vorliegenden Fall auf beiden Seitenkantenflächen.

Wenn die Funktionalisierung eine Passivierung ist, wird dadurch insbesondere ein Nicht-Klebrig-Machen und/oder eine Minderung der Klebkraft der Klebeschicht 2 bewirkt.

Bei dem Klebeprodukt 1 kann es sich insbesondere um ein Klebeband handeln, wobei die Klebeschicht 2 zumindest einseitig mit einer ihrer Deckflächen 2a auf einen textilen Träger oder auf einen Folienträger (Träger 4) aufgetragen wird.

Fig. 1 zeigt des Weiteren, dass die Klebeschicht 2 ebenfalls zumindest einseitig mit einer ihrer Deckflächen 2a mit einem Liner 5 mit niedriger Adhäsion, wie mit einer Silikonfolie oder mit einer silikonbeschichteten Folie, abgedeckt wird.

Die Klebeschicht 2 kann aus einer in einem Lösungsmittel oder als Dispersion aufgetragenen, insbesondere UV-gehärteten, Acrylatmasse oder aus einer Masse auf UV-Hotmelt-Basis oder auf Synthesekautschuk-Basis hergestellt werden, oder auch aus wässrigen Dispersionen oder aus unter Einsatz von Lösungsmitteln hergestellten anderen selbstklebenden Massen.

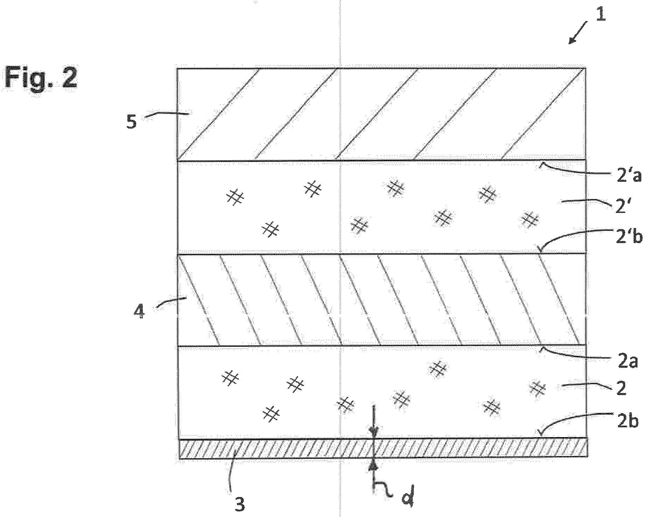

Das Klebeprodukt 1 mit dem weiteren, in Fig. 2 gezeigten strukturellen Grundaufbau umfasst (von unten nach oben) eine funktionalisierte, insbesondere passivierte, Schicht 3 auf einer ersten Klebeschicht 2, und zwar auf einer ihrer Deckflächen 2b, und einen Träger 4 auf der ersten Klebeschicht 2 und unter einer zweiten Klebeschicht 2', auf der sich anderseitig (Deckfläche 2a') ein Liner 5 befindet. Die zweite Klebeschicht 2' ist bzw. wird nicht erfindungsgemäß behandelt.

Generell kann ein struktureller Grundaufbau des erfindungsgemäß hergestellten Klebeprodukts 1 bevorzugt - neben einer Passivierung/Funktionalisierung insbesondere der Seitenkanten 2c der Klebeschicht 2 - einer der Folgenden sein:
- Liner 5 / Klebeschicht 2 / funktionalisierte, insbesondere passivierte, Schicht 3,
- Liner 5 / erste Klebeschicht 2 / zweite Klebeschicht 2' / erste Klebeschicht 2 / funktionalisierte, insbesondere passivierte, Schicht 3,
- Liner 5 / erste Klebeschicht 2 / Träger 4 / erste Klebeschicht 2 / funktionalisierte, insbesondere passivierte, Schicht 3,
- Liner 5 / erste Klebeschicht 2 / Träger 4 / zweite Klebeschicht 2' / funktionalisierte, insbesondere passivierte, Schicht 3 (wie in Fig. 2 dargestellt),
- Liner 5 / Klebeschicht 2 / funktionalisierte, insbesondere passivierte, Schicht 3 / Abdeckung,
- Klebeband in einer der vorstehenden Ausführungen, teilweise bedruckt.

Die nachfolgenden Ausführungsbeispiele der Erfindung unterscheiden sich dabei insbesondere hinsichtlich der für Funktionalisierung eingesetzten Materialien bzw.

Medien sowie hinsichtlich der darauf abgestimmten Applikations- und Behandlungsarten.

### Ausführungsbeispiel 1:

Zur Funktionalisierung wird eine filmbildende wasserbasierte, insbesondere vernetzende oder nachvernetzbare, Polyurethan-Dispersion, eingesetzt.

Für eine Funktionalisierung, insbesondere für eine Passivierung, können wässrige Systeme, wie z. B. exemplarisch eine wasserbasierte Polyurethan-Dispersion, benutzt werden. Ein Auftrag einer solchen Dispersion und eine anschließende Trocknung und dabei bevorzugte Vernetzung im Ofen sorgt dafür, dass eine mit der Dispersion bedeckte Seitenkante 2c einer Klebebandrolle - oder ggf. auch ein anderer Abschnitt eines Klebebandes 1, die/der dann nicht mehr für eine Verklebung zur Verfügung steht - funktionalisiert wird. Dies bedeutet, dass die eigentlichen Klebeeigenschaften des erfindungsgemäßen Klebebandes 1 durch eine Schicht aus einem PU-Filmbildner blockiert werden. Dabei ist dieser Vorgang zunächst ein reiner physikalischer Filmbildungsprozess, wobei er aber darauf nicht zwingend beschränkt ist. So kann auch eine Dispersion benutzt werden, welche nach der physikalischen Trocknung besonders bevorzugt noch eine weitere Vernetzung - z. B durch UV-Licht, erhöhte Temperatur o. ä. - ermöglicht. Auf Grund des zunächst rein physikalischen Trocknungsvorgangs ist es aber vorteilhafterweise auch möglich, verschiedene färbende Substanzen, wie beispielsweise schwarze Pigmente, oder entsprechend andere, in Wasser dispergierte oder gelöste Substanzen, wie Biozide, zusätzlich in die funktionalisierte Schicht 3 einzubringen.

Als eine derartige Dispersion kann zur Funktionalisierung alternativ oder zusätzlich auch eine wässrige Acrylat-Dispersion eingesetzt werden.

### Ausführungsbeispiel 2 (nicht erfindungsgemäß):

Zur Funktionalisierung werden (ohne Einsatz von Plasmaverfahren) Silane, insbesondere mehrwertige Alkoxysilane, eingesetzt.

Eine weitere Variante der Verhinderung der Klebrigkeit oder zumindest der Minderung der Klebkraft eines Klebebandes 1 bzw. einer Klebeschicht 2 ist der Einsatz eines Alkoxy-Silans bzw. eines Hydroxy-Silans, welches aus in einer vorangehenden Hydrolyse in wässriger Lösung entsteht. Auch Oligomere können zum Einsatz kommen. Dabei wird insbesondere die Nutzung eines Silans aus der Gruppe Aminosilane als eine besonders schnelle und effektive Variante der Funktionalisierung, insbesondere der Passivierung, angesehen.

Exemplarisch dafür steht nachfolgend das bevorzugt einsetzbare Aminopropyltrimethoxysilan, dessen Struktur sich wie folgt beschreiben lässt:

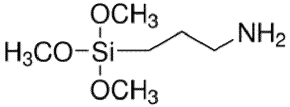

Die Alkoxygruppen des Aminosilans können unter Einfluss von Wasserdampf und einem Katalysator - wie beispielsweise einer Säure - Hydroxy-Silylgruppen bilden, welche anschließend untereinander zum Siloxan kondensieren können. So wird auf der aufgetragenen Oberfläche eine Schicht aus Siloxanen gebildet:

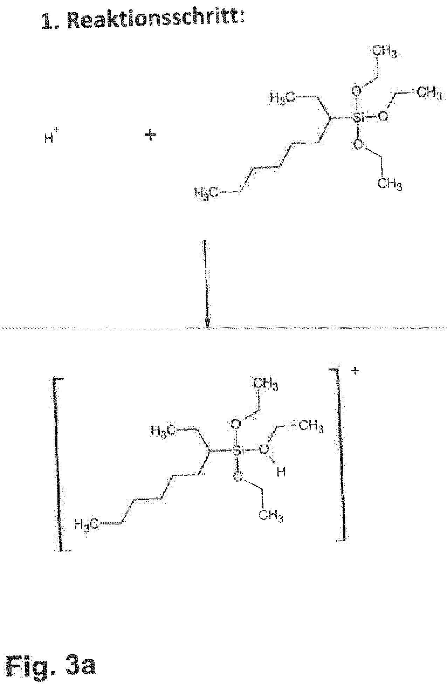

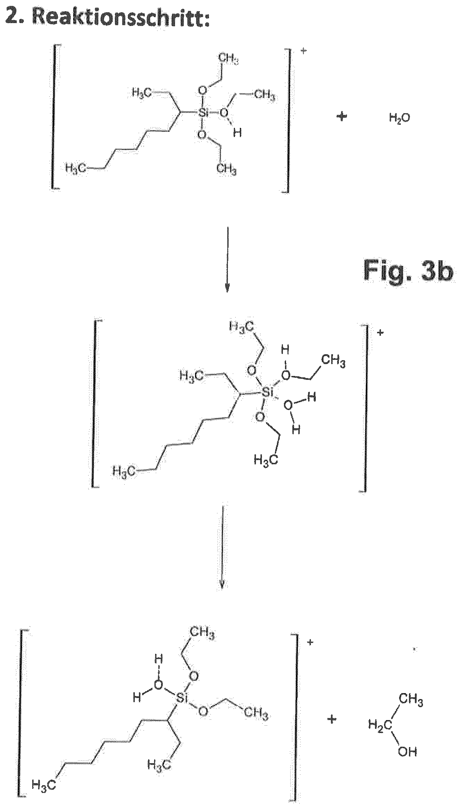

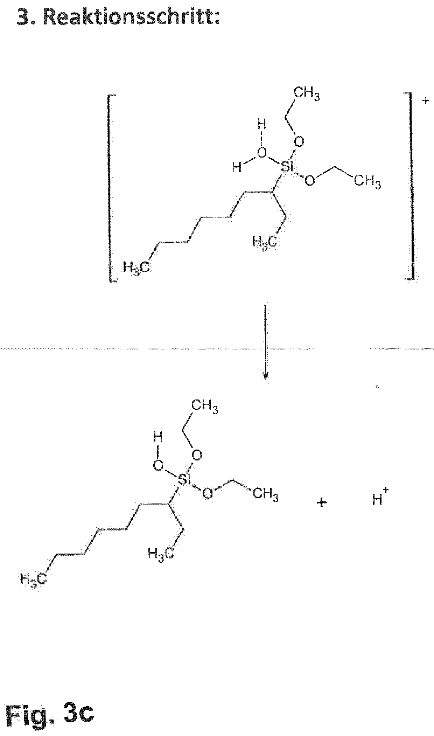

In Fig. 3a bis 3c ist - hier am Beispiel eines Triethoxy-Silans - eine der Kondensation vorausgehende Hydrolyse dargestellt. Wie aus den in Fig. 3a bis 3c dargestellten chemischen Gleichungen hervorgeht, läuft dabei eine Reaktion ab, deren drei charakteristische Reaktionsschritte in der Zeichnung ausgehend von einer trifunktionellen ethoxylierten silanhaltigen Ausgangsverbindung dargestellt sind. Die chemischen Gleichungen sind selbsterklärend. Hervorzuheben ist dabei, dass im zweiten Reaktionsschritt - im Gegensatz zu Reaktionen mit methoxilierten Ausgangsverbindungen - als Nebenprodukt nicht das - im Hinblick auf die technologische Verfahrensführung und Toxizität problembehaftete - Methanol, sondern Ethanol entsteht.

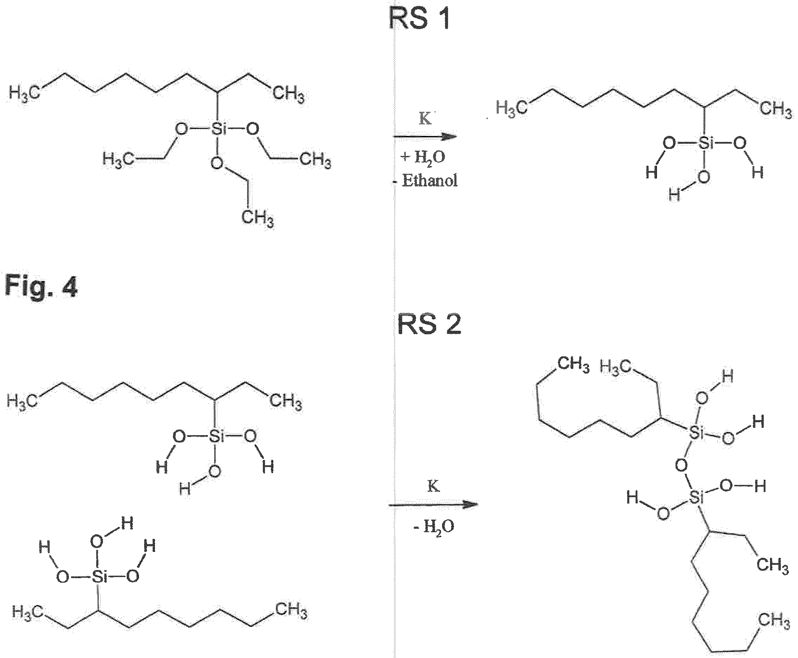

Fig. 4 bezieht sich auf die nachfolgende Kondensation. Den beiden in Fig. 4 dargestellten schematisierten chemischen Grundgleichungen ist dabei zu entnehmen, dass sich diese unter Einsatz eines ethoxylierten silanhaltigen Polymers in zwei Reaktionsschritten RS1, RS2 vollzieht. Im ersten Reaktionsschritt (RS1) wird unter Zufuhr von Wasser aus dem ethoxylierten silanhaltigen Polymer die Ethylgruppe Et abgespalten und zu Ethanol umgesetzt, wobei eine Wasserstoffanbindung an den Polymerrest erfolgt. Durch den Katalysator K wird dabei eine gemäß dem Stand der Technik geringe Hydrolysegeschwindigkeit der Ethanolreste im Vergleich zu Methanolresten beschleunigt. An das Silizium des silanhaltigen Polymers sind im Ergebnis des ersten Reaktionsschrittes RS1 infolgedessen Hydroxylgruppen gebunden. Dadurch kann zur eigentlichen Vernetzung im engeren Sinn im zweiten Reaktionsschritt (RS2) eine unter Abspaltung von Wasser ablaufende katalysierte (Katalysator K) Polykondensation erfolgen, wobei die Siliziumatome über Sauerstoffbrücken miteinander verbunden sind, sich also vernetzte Polysiloxane bilden. Die Reaktionsschritte RS1, RS2 können - was das Polymer betrifft - in einem Ein-Komponenten- oder MehrKomponenten-System erfolgen.

Dieser Vorgang kann durch Reste von Acrylsäure aus dem Klebstoff zusätzlich katalysiert werden, so dass sich somit schnell bzw. beschleunigt ein Netzwerk auf der Klebstoffschicht 2 bilden kann, wodurch sich die funktionalisierte Schicht 3 ausbildet.

Für die detaillierte Silanauswahl stehen dabei verschiedene weitere Optionen zur Wahl. So kann z. B. mit Vorteil der so genannte α-Effekt genutzt werden, wodurch die Vernetzungsreaktion weiter beschleunigt werden kann.

Unter dem α-Effekt wird dabei Folgendes verstanden: Bekannte organofunktionelle Silane sind zumeist Trialkoxysilane mit einer Propylenbrücke zwischen dem Si-Atom und einer an diesem angebundenen weiteren funktionellen Gruppe X. Als funktionelle Gruppen X sind - wie vorstehend aufgeführt - insbesondere Amino-, Glycidoxy-, Schwefel- und Methacryloxy-Gruppen von Bedeutung. Durch einen Ersatz der Propylenbrücke durch eine kürzere Methylenbrücke wird eine extrem erhöhte Reaktivität der Si-Alkoxygruppen erzielt. Diese resultiert aus einer elektronischen Wechselwirkung der funktionellen Gruppe X mit dem Si-Atom, die nur in dieser α-Stellung beobachtet wird, weswegen man vom so genannten α-Effekt und von α-Chemie spricht. Z. B. aktiviert die Nachbarschaft eines elektronegativen Donors, wie Stickstoff oder Sauerstoff in α-Stellung zum Silizium-Atom, also nur durch eine Methylenbrücke davon getrennt, die Alkoxyfunktionen am Silizium-Atom. Diese sind damit gegenüber Nucleophilen reaktiver, wodurch sie insbesondere in der Gegenwart von Wasser schneller hydrolysieren.

Im Gegensatz zu Silanen mit Propylenspacer (γ-Silane) stellen bei den α-Silanen neben den Trialkoxy- auch die Dialkoxysilane wichtige Bausteine der zu synthetisierenden Polymere dar. Durch den Einsatz von di-oder trifunktionellen Silanen kann beispielsweise bei der Vernetzung eine gezielte Einstellung der Vernetzungsdichte erfolgen.

Durch eine Mischung aus verschiedenen Silanen können zudem die Eigenschaften bei der Funktionalisierung auf die verschiedenste Weise modifiziert werden, z. B. kann die Medienresistenz, insbesondere durch Erzeugung einer Hydrophobie und/oder einer Oleophobie, verbessert werden.

Für eine hochqualitative Aufbringung sollte eine Inertisierung, z. B. durch trockenen Stickstoff, unter Überdruck vorgesehen werden.

Auf Grund seiner niedrigen Viskosität kann das schichtbildende Material mit Hilfe einer Sprühapparatur aufgetragen werden

Begünstigt auch durch den nachfolgenden Härtungsvorgang können auch färbende Stoffe, wie beispielsweise Pigmente, eingebracht werden.

Die Reaktion kann mit Vorteil so gesteuert werden, dass sie ohne Wärmezufuhr bei Raumtemperatur schnell genug für eine effiziente industrielle Verfahrensführung abläuft.

### Ausführungsbeispiel 3:

Zur Funktionalisierung werden Silane in Kombination mit silanmodifizierten Polymeren (SMP) eingesetzt.

Als weitere technische Lösung können auch silanmodifizierte Polymere in Kombination, d. h. in einer reaktiven Mischung, mit einem Silan eingesetzt werden. Dabei können verschiedene Silane mit verschiedenen silanmodifizierten Polymeren kombiniert werden. Als Beispiel seien hier wiederum das Aminopropyltrimethoxysilan sowie dazu silanmodifizierte Polymere erwähnt, wie sie z. B. von den Firmen Wacker, Evonik u. a. vertrieben werden.

So handelt es sich z. B. bei dem Polymer ST 61 LV (Lieferant: Fa. Evonik) um ein lineares, endständig lateral silanmodifiziertes, weichmacherfreies Polyurethan-Polyether-Copolymer, das in einer Polymer-Mischung als ein längerkettiges Präpolymer eingesetzt werden kann. Das Evonik-Polymer ST 61 LV ist ein silanterminiertes Polyurethan, welches in Bezug auf seine kinematische Viskosität ein Analogon zu dem Polymer der Fa. Wacker GENIOSIL^{®} STP-E 10 darstellt, das alternativ in gleichen Anteilen eingesetzt werden könnte, ohne dass dadurch nennenswerte Unterschiede in den resultierenden Eigenschaften auftreten würden. Bei GENIOSIL^{®} STP-E10 handelt es sich um einen Dimethoxy(methyl)silyl-methylcarbamat-terminierten Polyether mit zwei endständigen Dimethoxysilan-Gruppen, mit einer mittleren molaren Masse von 8889 g/mol, mit einer Polydispersität von etwa 1.6 und einer Menge von funktionellen Silyl-Gruppen E(t) von 0.225 Milliäquivalent bezogen auf ein Gramm des Polymers. Seine dynamische Viskosität bei 25 °C - gemessen nach DIN 51562 - liegt bei 10 Pas. Die chemische Konstitution des Evonik-Präpolymer-Typs ST 61 LV entspricht von der Basis her - im Gegensatz zu dem genannten Wacker-Präpolymer-Typ, der ein α-Silan ist - aber den γ-Silanen. Ein vergleichbares Wacker-Präpolymer, das ein γ-Silan ist, jedoch eine etwas höhere Viskosität aufweist, ist GENIOSIL^{®} STP-E15.

Bei Tegopac Seal 100 (Lieferant: Fa. Evonik) handelt es sich um ein endständig lateral ethoxysiliertes Polypropylenglykol, das in den Mischungen als ein erstes Präpolymer eingesetzt werden kann. Tegopac Seal 100 ist ein Präpolymer, bei dem alkoxyfunktionelle Silangruppen, insbesondere Ethoxygruppen, nicht terminal in das Gerüst des Polymers eingebaut sind, sondern gezielt seitenständig verteilt über die Kette des molekularen Grundgerüstes angeordnet sind, wobei sich diese seitenständig alkoxyfunktionellen Silangruppen aber insbesondere an den Enden der Ketten befinden. Mittels der über die Molekülkettenlänge verteilt eingebauten Vernetzungseinheiten können wichtige Eigenschaften, wie die Vernetzungsdichte, gesteuert werden. Tegopac Seal 100 weist somit neben dem Vorteil der Ethanolabspaltung die Eigenschaft auf, dass aufgrund der Seitenkettensubstitution eine leichtere dreidimensionale Vernetzung erfolgen kann, welche zu einem sehr dichten Netzwerk und daher zu einer hohen Scherfestigkeit führt. Es hat eine kinematische Viskosität von 55 Pas bei 23 °C. Tegopac Seal 100 hat eine Kettenlänge im Bereich von 12 K bis 18 K, im Mittel von 15 K, wobei 1 K einer Kettenlänge mit einer molaren Masse von 1000 g/mol entspricht.

Außerdem kann mit Vorteil in der Polymermischung - als sogenannter "Booster" - ein ethoxysiliertes, endständig lateral silanmodifiziertes Präpolymer eingesetzt werden, das in der Mischung als ein zweites, dabei kürzerkettiges Präpolymer auftritt. Ein solches Präpolymer ist z. B. der Reaktivverdünner Tegopac RD 1 (Lieferant: Fa. Evonik). Die Viskosität bei 23 °C liegt bei 1 Pas. Tegopac RD1 hat eine Kettenlänge im Bereich von 4 K bis 7 K, im Mittel von 5,5 K.

Als eine Gesamtkettenlänge, der die jeweilige molare Masse entspricht, ist dabei die Summe der molaren Masse der Hauptkette und - wenn vorhanden - aller Seitenketten anzusehen. So kann mindestens eines der beiden Präpolymere, oder auch beide Präpolymere, aus verzweigten oder unverzweigten Kettenmolekülen bestehen, wobei die endständige und/oder seitenständige Silanmodifizierung in einem verzweigten Molekül an einer Seitenkette und/oder an der Hauptkette vorliegen kann.

Mittels der über die Molekülkettenlänge verteilt eingebauten Vernetzungseinheiten können wichtige Eigenschaften, wie die Vernetzungsdichte, gesteuert werden.

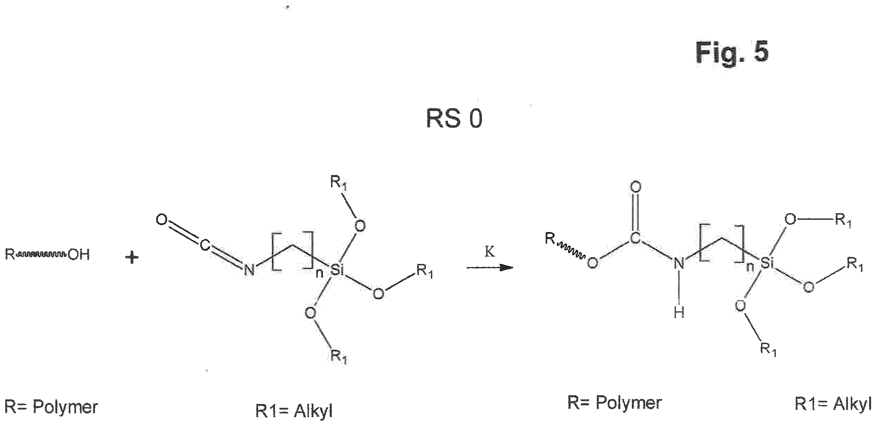

In Fig. 5 ist eine schematisierte chemische Grundgleichung (RS0) zum Ablauf eines bei Einsatz von silanmodifizierten Polymeren optional ablaufenden Reaktionsschrittes des erfindungsgemäßen Verfahrens dargestellt. Dabei erfolgt die Ausbildung eines Urethangruppen (-OCON-Gruppen) enthaltenden alkoxylierten (-OR-Gruppen enthaltenden) silanhaltigen Hybridpolymers, wie es das vorstehend erwähnte, lineare endständig lateral silanmodifizierte Polyurethan-Polyether-Copolymer ST 61 LV der Fa. Evonik ist, und es auch die vorstehend genannten STP-E-Typen der Fa. Wacker sind.

Die Hydrolyse und Kondensation der Polymere ist dabei vergleichbar mit den Vorgängen bei den reinen Silanen. Dabei werden beim Polymer die Silyl-Gruppen je nach Chemie des für die Synthese genutzten Silans - γ-Effekt vs. α-Effekt - langsamer oder schneller hydrolysiert und kondensiert.

Die Geschwindigkeit der Reaktion auf der zu funktionalisierenden, insbesondere zu passivierenden, Oberfläche O kann vorteilhafterweise durch das Mischungsverhältnis aus Silan und silanmodifiziertem Polymer angepasst werden.

Zudem kann die Flexibilität durch die Funktionalisierung ebenfalls eingestellt werden, da die silanmodifizierten Polymere ein weiteres Netzwerk bilden, als die Silane allein. Somit kann neben den Trocknungseigenschaften auch eine Haptik durch die Funktionalisierung eingestellt werden. Die Viskosität hierbei ist ebenfalls sehr niedrig, da das Silan verdünnend auf das SMP wirkt. Auch können mit Vorteil funktionelle Stoffe, wie Pigmente, Biozide etc., eingebracht werden.

### Ausführungsbeispiel 4:

Zur Funktionalisierung der Oberfläche O der Klebeschicht 2 unter einer zumindest bereichsweisen Schichtbildung (Schicht 3) wird ein epoxidiertes Polybutadien eingesetzt.

Exemplarisch für bevorzugt einsetzbare epoxidierte Polybutadien-Verbindungen steht die nachfolgende Strukturformel:

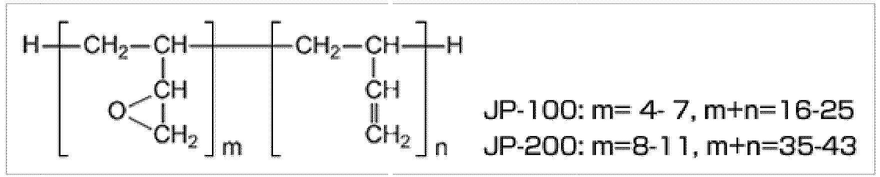

Bei den Angaben "JP 100" und "JP 200" handelt es sich um Handelsnamen der Firma Nippon Soda Co., Ltd.

Die Vernetzungsreaktion bzw. Filmbildung des epoxidierten Polybutadiens wird dabei mittels eines Photoinitiators - z. B. besonders bevorzugt mit Bis(4-dodecylphenyl)-iodoniumhexafluoroantimonat - initiiert. Bei dem Katalysator-Wirkstoff K handelt es sich dabei um ein Lewis-Säure-Base-Addukt aus einer geblockten Lewis-Säure und einem Antimonat, der unter dem Namen Deuteron UV 1240 von der Fa. Deuteron GmbH im Handel vertrieben wird. Es handelt sich vom Aussehen her um ein rötliches viskoses Öl mit einer Dichte im Bereich von 1,22 g/cm³ bis 1,28 g/cm³ und einem Flammpunkt von über 135 °C, wobei der Wirkstoff in einer Konzentration von 50 Ma.-% in einem benzolfreien, aus Propylencarbonat bestehenden Lösungsmittel vorliegt.

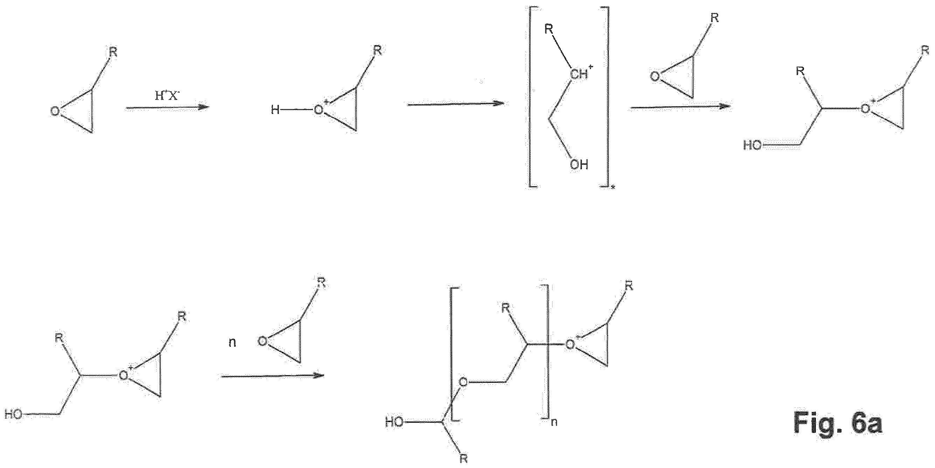

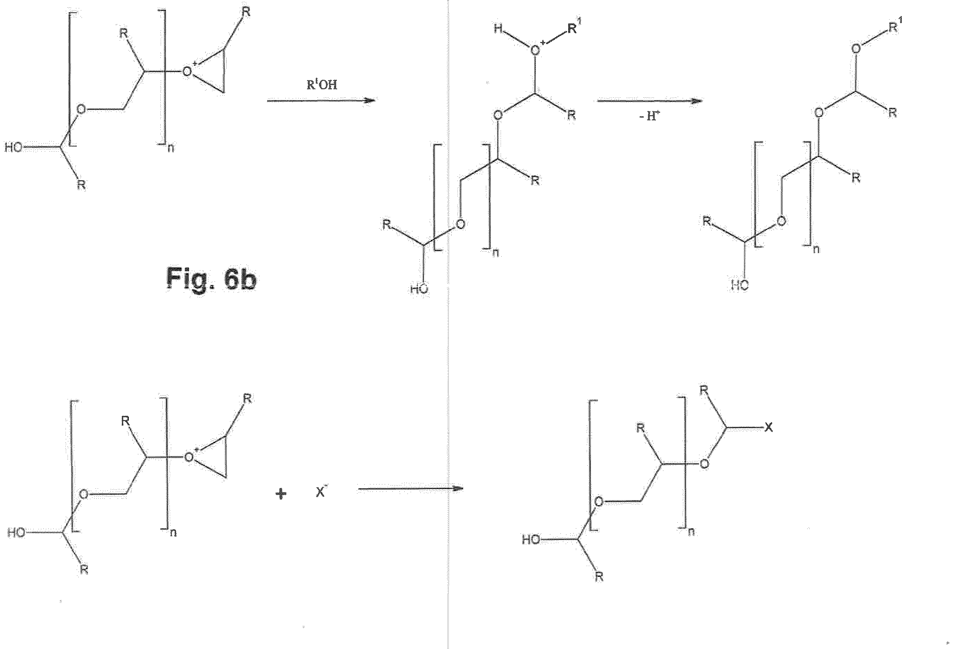

Der Mechanismus ist dabei ähnlich dem einer kationischen Polymerisation und ist selbsterklärend mit seinen einzelnen Reaktionsschritten in Fig. 6a und 6b dargestellt.

Eine, insbesondere schon einmalige und kurze Bestrahlung des Funktionalsierungsmittels kann zu einer kompletten Durchhärtung führen, was es ermöglicht, verschiedene Schichtdicken d der Funktionalisierungsschicht 3 einzustellen, wobei auch färbende Substanzen, wie Pigmente, eingebracht werden können. Nach Beendigung der Filmbildung ergibt sich eine flexible, folienartige Schicht 3 auf dem behandelten Bereich der Oberfläche O der Klebeschicht 2.

Durch die zumindest bereichsweise Funktionalisierung der Oberfläche O der Klebeschicht 2 kann - je nach der Art der zur Funktionalisierung eingesetzten Oberflächenbehandlung - im Rahmen der Erfindung eine Schicht 3 mit einer Dicke d im Bereich von 0,05 µm bis 500 µm, insbesondere im Bereich von 0,5 µm bis 120 µm, besonders bevorzugt im Bereich von 1,0 µm bis 75 µm, hergestellt werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert werden. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann.

### Bezugszeichen

- 1: Klebeprodukt
- 2: Klebeschicht
- 2a, 2b: Deckflächen
- 2c: Kantenflächen
- 3: funktionalisierte Schicht
- 4: Träger
- 5: Liner

- d: Dicke von 3
- O: Oberfläche der Klebeschicht 2

## Patentansprüche

1. Verfahren zur Herstellung eines Klebeproduktes (1), umfassend mindestens eine Klebeschicht (2) mit zwei Deckflächen (2a, 2b), die über Kantenflächen (2c) verbunden sind, wobei die Deckflächen (2a, 2b) und die Kantenflächen (2c) die Oberfläche (O) der Klebeschicht (2) bilden,
wobei die Oberfläche (O) der Klebeschicht (2) unter einer zumindest bereichsweisen Bildung einer Schicht (3) einer Funktionalisierung unterzogen wird, wobei sich an eine bereichsweise Auftragung von zu einer physikalischen und/oder chemischen Vernetzung oder Beschichtung führenden Medien eine Trocknung und/oder Aushärtung und/oder Vernetzung in einem Ofen oder in einer Heißluftzone und/oder in einer Reaktionszone, in der eine Beaufschlagung mit UV- oder Elektronenstrahlung erfolgt, anschließen,
**dadurch gekennzeichnet, dass**
- zur Funktionalisierung Silane in Kombination mit silanmodifizierten organischen Polymeren eingesetzt werden oder
- zur Funktionalisierung eine filmbildende wasserbasierte Polyurethan- und/oder vernetzende oder nachvernetzbare Acrylat-Dispersion eingesetzt wird oder
- zur Funktionalisierung ein epoxidiertes Polybutadien eingesetzt wird.

2. Verfahren nach Anspruch 1,
**dadurch gekennzeichnet, dass** die Klebeschicht (2) zumindest einseitig mit einer ihrer Deckflächen (2a) auf einen Träger (4), wie einen textilen Träger oder einen Folienträger, aufgetragen wird.

3. Verfahren nach Anspruch 1 oder 2,
**dadurch gekennzeichnet, dass** die Klebeschicht (2) zumindest einseitig mit einer ihrer Deckflächen (2b) mit einem Liner (5) mit niedriger Adhäsion, wie mit einer Silikonfolie oder mit einer silikonbeschichteten Folie oder mit einer Polyolefinfolie, wie z. B. mit einer Polyethylen enthaltenden Folie abgedeckt wird.

4. Verfahren nach einem der Ansprüche 1 bis 3,
**dadurch gekennzeichnet, dass** die bereichsweise Funktionalisierung auf mindestens einer Kantenfläche (2c) und/oder mindestens einer Deckfläche (2a) der Klebeschicht (2a, 2b) erfolgt.

5. Verfahren nach einem der Ansprüche 1 bis 4,
**dadurch gekennzeichnet, dass** die Klebeschicht (2) aus einer UV-gehärteten Acrylatmasse und/oder aus einer Masse auf UV-Hotmelt-Basis oder aus einer Masse auf Synthesekautschuk-Basis oder auf der Basis eines lösungsmittelhaltigen oder Dispersionsklebers hergestellt wird.

6. Verfahren nach einem der Ansprüche 1 bis 5,
**dadurch gekennzeichnet, dass** die Funktionalisierung eine Passivierung ist, die ein Nicht-Klebrig-Machen und/oder eine Minderung der Klebkraft der Klebeschicht (2) umfasst.

7. Verfahren nach einem der Ansprüche 1 bis 6,
**dadurch gekennzeichnet, dass** die Funktionalisierung in einem oder mehreren der folgenden Arbeitsschritte besteht:
- Schützen vor Verschmutzung,
- Ausrüstung von nicht-klebrigen Kanten (2c) der Klebeschicht (2) zur Nutzung als Führungshilfe bei der Förderung des Klebeprodukts (1) bei der Verarbeitung,
- Stabilisierung der Eigenschaften der Klebeschicht (2) im Hinblick auf ein Anforderungsprofil des Klebeprodukts (1) beim Einsatz in einem Innenraum oder im Außenbereich,
- Schützen des Klebeproduktes (1) vor Extrembedingungen,
- Einfärbung von Kanten (2c) des Klebeproduktes (1), insbesondere der Klebeschicht,
- Inhibierung von biologischer Aktivität, insbesondere durch antimykotische und/oder antibakterielle Additive,
- zumindest bereichsweise Versiegelung der Oberfläche (O) der Klebeschicht (2), insbesondere zur Senkung der Permeabilität, vorzugsweise gegenüber aggressiven Gasen und Medien,
- partielle Veränderung der viskoelastischen Eigenschaften der Klebeschicht (2),
- Nivellierung von insbesondere geschnittenen Kantenflächen (2c) zur Erzielung eines einheitlichen Rollenspiegels,
- Einstellung eines Brechungsindexes der Klebeschicht (2),
- Generierung von Tracing-Markern zum Nachverfolgen der Klebeschicht (2) bei einer Verklebung,
- Schützen gegen UV-Strahlung.

8. Verfahren nach einem der Ansprüche 1 bis 7,
**dadurch gekennzeichnet, dass** zur bereichsweisen Auftragung von zu einer physikalischen und/oder chemischen Vernetzung oder Beschichtung führenden Medien, eines oder folgende Verfahren eingesetzt werden:
- Lackierung, z. B. manuell per Pinsel, Rolle, Bürste oder Schwamm,
- Sprühverfahren, z. B. mit Sprühflasche, Druckdüse, Airbrush, Ultraschall-Zerstäuber etc., vorzugsweise in einem automatisierten Prozess
- Curtain-Coating-Auftragung,
- Auftrag zwischen zwei Walzen unter Druck
- Beschichtungsverfahren, wie Blade-Coating, Auftragung mit Komma-Bar, Rakel sowie indirekte Beschichtung und/oder über ein Walzenauftragswerk.

9. Verfahren nach einem der Ansprüche 1 bis 8,
**dadurch gekennzeichnet, dass** das Klebeprodukt (1) mit folgendem strukturellen Grundaufbau hergestellt wird:
- Liner (5) / Klebeschicht (2) / funktionalisierte, insbesondere passivierte, Schicht (3),
- Liner (4) / erste Klebeschicht 2 / zweite Klebeschicht (2') / erste Klebeschicht (2) / funktionalisierte, insbesondere passivierte, Schicht (3),
- Liner (5) / erste Klebeschicht (2) / Träger (4) / erste Klebeschicht (2) / funktionalisierte, insbesondere passivierte, Schicht (3)
- Liner (5) / erste Klebeschicht (2) / Träger / zweite Klebeschicht (2') / funktionalisierte, insbesondere passivierte, Schicht (3)
- Liner (5) / Klebeschicht (2) / funktionalisierte, insbesondere passivierte, Schicht (3) / Abdeckung
oder
- Klebeprodukt (1) in einer der vorstehenden Ausführungen, teilweise bedruckt.

10. Verfahren nach einem der Ansprüche 1 bis 9,
**dadurch gekennzeichnet, dass** zur Funktionalisierung mehrwertige Alkoxysilane in Kombination mit silanmodifizierten organischen Polymeren eingesetzt werden.

11. Verfahren nach einem der Ansprüche 1 bis 10,
**dadurch gekennzeichnet, dass** als Klebeprodukt (1) ein Klebeband, vorzugsweise als Klebebandrolle in auf sich selbst gewickelter Form, oder ein Stanzteil hergestellt wird.

12. Verfahren nach einem der Ansprüche 1 bis 11,
**dadurch gekennzeichnet, dass** durch die zumindest bereichsweise Funktionalisierung der Oberfläche (O) der Klebeschicht (2) eine Schicht (3) mit einer Dicke (d) im Bereich von 0,05 µm bis 500 µm, insbesondere im Bereich von 0,5 µm bis 120 µm, besonders bevorzugt im Bereich von 1,0 µm bis 75 µm, hergestellt wird.

13. Klebeprodukt (1) hergestellt in einem Verfahren nach einem der Ansprüche 1 bis 12.

## Claims

1. Method for producing an adhesive product (1), comprising at least one adhesive layer (2) with two cover surfaces (2a, 2b), which are connected via edge surfaces (2c), wherein the cover surfaces (2a, 2b) and the edge surfaces (2c) form the surface (O) of the adhesive layer (2),
wherein the surface (O) of the adhesive layer (2) is subjected to functionalization with at least regional formation of a layer (3), wherein a regional application of media leading to physical and/or chemical crosslinking or coating is followed by drying and/or curing and/or crosslinking in an oven or in a hot air zone and/or in a reaction zone in which exposure to UV or electron radiation takes place,
**characterized in that**
- for functionalization silanes in combination with silane-modified organic polymers are used or
- for functionalization a film-forming water-based polyurethane and/or crosslinking or post-crosslinkable acrylate dispersion is used or
- for functionalization an epoxidized polybutadiene is used.

2. Method according to claim 1,
**characterized in that** the adhesive layer (2) is applied at least on one side with one of its cover surfaces (2a) to a carrier (4), such as a textile carrier or a film carrier.

3. Method according to claim 1 or 2,
**characterized in that** the adhesive layer (2) is covered at least on one side with one of its cover surfaces (2b) with a liner (5) with low adhesion, such as with a silicone film or with a silicone-coated film or with a polyolefin film, such as e.g. with a polyethylene-containing film.

4. Method according to one of claims 1 to 3,
**characterized in that** the regional functionalization takes place on at least one edge surface (2c) and/or at least one cover surface (2a) of the adhesive layer (2a, 2b).

5. Method according to one of claims 1 to 4,
**characterized in that** the adhesive layer (2) is produced from a UV-cured acrylate composition and/or from a composition based on UV hot-melt or from a composition based on synthetic rubber or based on a solvent-containing or dispersion adhesive.

6. Method according to one of claims 1 to 5,
**characterized in that** the functionalization is a passivation which comprises making non-tacky and/or reducing the adhesive force of the adhesive layer (2).

7. Method according to one of claims 1 to 6,
**characterized in that** the functionalization consists of one or more of the following work steps:
- protection against contamination,
- equipping non-tacky edges (2c) of the adhesive layer (2) for use as a guide aid in conveying the adhesive product (1) during processing,
- stabilization of the properties of the adhesive layer (2) with regard to a requirement profile of the adhesive product (1) when used in an interior space or in the outdoor area,
- protecting the adhesive product (1) against extreme conditions,
- coloring of edges (2c) of the adhesive product (1), in particular of the adhesive layer,
- inhibition of biological activity, in particular by antimycotic and/or antibacterial additives,
- at least regional sealing of the surface (O) of the adhesive layer (2), in particular for reducing permeability, preferably against aggressive gases and media,
- partial modification of the viscoelastic properties of the adhesive layer (2),
- leveling of in particular cut edge surfaces (2c) to achieve a uniform roll face,
- adjustment of a refractive index of the adhesive layer (2),
- generation of tracing markers for tracking the adhesive layer (2) during bonding,
- protection against UV radiation.

8. Method according to one of claims 1 to 7,
**characterized in that** for the regional application of media leading to physical and/or chemical crosslinking or coating, one or the following methods are used:
- painting, e.g. manually by paint brush, roller, brush or sponge,
- spray method, e.g. with spray bottle, pressure nozzle, airbrush, ultrasonic atomizer etc., preferably in an automated process
- curtain coating application,
- application between two rollers under pressure
- coating methods, such as blade coating, application with comma bar, doctor blade as well as indirect coating and/or via a roller application unit.

9. Method according to one of claims 1 to 8,
**characterized in that** the adhesive product (1) is produced with the following structural basic construction:
- liner (5) / adhesive layer (2) / functionalized, in particular passivated, layer (3),
- liner (4) / first adhesive layer 2 / second adhesive layer (2') / first adhesive layer (2) / functionalized, in particular passivated, layer (3),
- liner (5) / first adhesive layer (2) / carrier (4) / first adhesive layer (2) / functionalized, in particular passivated, layer (3)
- liner (5) / first adhesive layer (2) / carrier / second adhesive layer (2') / functionalized, in particular passivated, layer (3)
- liner (5) / adhesive layer (2) / functionalized, in particular passivated, layer (3) / cover
or
- adhesive product (1) in one of the above embodiments, partially printed.

10. Method according to one of claims 1 to 9,
**characterized in that** for functionalization multivalent alkoxysilanes in combination with silane-modified organic polymers are used.

11. Method according to one of claims 1 to 10,
**characterized in that** as adhesive product (1) an adhesive tape, preferably as an adhesive tape roll in self-wound form, or a die-cut part is produced.

12. Method according to one of claims 1 to 11,
**characterized in that** by the at least regional functionalization of the surface (O) of the adhesive layer (2) a layer (3) with a thickness (d) in the range of 0.05 µm to 500 µm, in particular in the range of 0.5 µm to 120 µm, particularly preferably in the range of 1.0 µm to 75 µm, is produced.

13. Adhesive product (1) produced in a method according to one of claims 1 to 12.

## Revendications

1. Procédé de fabrication d'un produit adhésif (1), comprenant au moins une couche adhésive (2) avec deux surfaces de couverture (2a, 2b), qui sont reliées par des surfaces de bord (2c), où les surfaces de couverture (2a, 2b) et les surfaces de bord (2c) forment la surface (O) de la couche adhésive (2), où la surface (O) de la couche adhésive (2) est soumise à une fonctionnalisation avec formation au moins partielle d'une couche (3), où une application par zones de milieux conduisant à une réticulation ou revêtement physique et/ou chimique est suivie d'un séchage et/ou durcissement et/ou réticulation dans un four ou dans une zone d'air chaud et/ou dans une zone de réaction, dans laquelle un traitement par rayonnement UV ou électronique a lieu,
**caractérisé en ce que**
- pour la fonctionnalisation, des silanes en combinaison avec des polymères organiques modifiés par des silanes sont utilisés ou
- pour la fonctionnalisation, une dispersion de polyuréthane filmogène à base d'eau et/ou d'acrylate réticulante ou post-réticulable est utilisée ou
- pour la fonctionnalisation, un polybutadiène époxydé est utilisé.

2. Procédé selon la revendication 1,
**caractérisé en ce que** la couche adhésive (2) est appliquée au moins d'un côté avec une de ses surfaces de couverture (2a) sur un support (4), tel qu'un support textile ou un support de film.

3. Procédé selon la revendication 1 ou 2,
**caractérisé en ce que** la couche adhésive (2) est recouverte au moins d'un côté avec une de ses surfaces de couverture (2b) avec un liner (5) à faible adhésion, tel qu'avec un film silicone ou avec un film revêtu de silicone ou avec un film polyoléfine, tel que par exemple avec un film contenant du polyéthylène.

4. Procédé selon l'une des revendications 1 à 3,
**caractérisé en ce que** la fonctionnalisation par zones s'effectue sur au moins une surface de bord (2c) et/ou au moins une surface de couverture (2a) de la couche adhésive (2a, 2b).

5. Procédé selon l'une des revendications 1 à 4,
**caractérisé en ce que** la couche adhésive (2) est fabriquée à partir d'une masse d'acrylate durcie aux UV et/ou à partir d'une masse à base de hot-melt UV ou à partir d'une masse à base de caoutchouc synthétique ou à base d'un adhésif contenant des solvants ou d'un adhésif en dispersion.

6. Procédé selon l'une des revendications 1 à 5,
**caractérisé en ce que** la fonctionnalisation est une passivation qui comprend un rendu non-collant et/ou une diminution de la force adhésive de la couche adhésive (2).

7. Procédé selon l'une des revendications 1 à 6,
**caractérisé en ce que** la fonctionnalisation consiste en une ou plusieurs des étapes de travail suivantes :
- Protection contre la contamination,
- Équipement de bords non-collants (2c) de la couche adhésive (2) pour utilisation comme aide de guidage lors du transport du produit adhésif (1) pendant le traitement,
- Stabilisation des propriétés de la couche adhésive (2) en vue d'un profil d'exigences du produit adhésif (1) lors de l'utilisation dans un espace intérieur ou en extérieur,
- Protection du produit adhésif (1) contre les conditions extrêmes,
- Coloration des bords (2c) du produit adhésif (1), en particulier de la couche adhésive,
- Inhibition de l'activité biologique, en particulier par des additifs antimycosiques et/ou antibactériens,
- Scellement au moins partiel de la surface (O) de la couche adhésive (2), en particulier pour réduire la perméabilité, de préférence vis-à-vis des gaz et milieux agressifs,
- Modification partielle des propriétés viscoélastiques de la couche adhésive (2),
- Nivellement de surfaces de bord (2c) en particulier coupées pour obtenir un miroir de rouleau uniforme,
- Réglage d'un indice de réfraction de la couche adhésive (2),
- Génération de marqueurs de traçage pour suivre la couche adhésive (2) lors d'un collage,
- Protection contre le rayonnement UV.

8. Procédé selon l'une des revendications 1 à 7,
**caractérisé en ce que** pour l'application par zones de milieux conduisant à une réticulation ou revêtement physique et/ou chimique, un ou les procédés suivants sont utilisés :
- Laquage, par ex. manuellement au pinceau, rouleau, brosse ou éponge,
- Procédé de pulvérisation, par ex. avec flacon pulvérisateur, buse de pression, aérographe, nébuliseur à ultrasons etc., de préférence dans un processus automatisé
- Application par curtain-coating,
- Application entre deux rouleaux sous pression
- Procédés de revêtement, tels que blade-coating, application avec comma-bar, raclette ainsi que revêtement indirect et/ou via un système d'application à rouleaux.

9. Procédé selon l'une des revendications 1 à 8,
**caractérisé en ce que** le produit adhésif (1) est fabriqué avec la structure de base suivante :
- Liner (5) / couche adhésive (2) / couche fonctionnalisée, en particulier passivée, (3),
- Liner (4) / première couche adhésive 2 / deuxième couche adhésive (2') / première couche adhésive (2) / couche fonctionnalisée, en particulier passivée, (3),
- Liner (5) / première couche adhésive (2) / support (4) / première couche adhésive (2) / couche fonctionnalisée, en particulier passivée, (3)
- Liner (5) / première couche adhésive (2) / support / deuxième couche adhésive (2') / couche fonctionnalisée, en particulier passivée, (3)
- Liner (5) / couche adhésive (2) / couche fonctionnalisée, en particulier passivée, (3) / couverture
ou
- Produit adhésif (1) dans l'une des exécutions précédentes, partiellement imprimé.

10. Procédé selon l'une des revendications 1 à 9,
**caractérisé en ce que** pour la fonctionnalisation, des alcoxysilanes polyvalents en combinaison avec des polymères organiques modifiés par des silanes sont utilisés.

11. Procédé selon l'une des revendications 1 à 10,
**caractérisé en ce que** comme produit adhésif (1), un ruban adhésif, de préférence sous forme de rouleau de ruban adhésif enroulé sur lui-même, ou une pièce découpée est fabriqué.

12. Procédé selon l'une des revendications 1 à 11,
**caractérisé en ce que** par la fonctionnalisation au moins partielle de la surface (O) de la couche adhésive (2), une couche (3) avec une épaisseur (d) dans la plage de 0,05 µm à 500 µm, en particulier dans la plage de 0,5 µm à 120 µm, particulièrement préférée dans la plage de 1,0 µm à 75 µm, est fabriquée.

13. Produit adhésif (1) fabriqué dans un procédé selon l'une des revendications 1 à 12.
